# EUROPEAN PATENT SPECIFICATION

(11) **EP 3 015 406 B1**
(45) Date of publication and mention of the grant of the patent: **28.02.2018**
(21) Application number: 15192050.1
(22) Date of filing: 29.10.2015
(51) Int. Cl.: B65G 47/08, B65G 47/252

(54) **CHANGING ORIENTATION OF AN ARTICLE ON A MOVING CONVEYOR**
ÄNDERUNG DER AUSRICHTUNG EINES GEGENSTANDES AUF EINEM SICH BEWEGENDEN TRANSPORTBAND
MODIFICATION DE L'ORIENTATION D'UN ARTICLE SUR UN CONVOYEUR EN MOUVEMENT

(30) Priority: 29.10.2014 US 201414527719
(43) Date of publication of application: 04.05.2016
(73) Proprietor: Cerf, Alain, Pinellas Park, FL 33782 (US)
(72) Inventor: Cerf, Alain, Pinellas Park, FL 33782 (US)
(74) Representative: Szabo, Zsolt

(56) References cited:
- EP-A1- 2 662 319
- GB-A- 2 230 245
- US-A- 5 395 207

## Description

### Field of the Invention

This invention relates to changing the orientation of articles moving on a conveyor prior to wrapping the articles with a heat shrink film. Afterwards the wrapped article(s) are heat shrunk to form a bundle.

EP-2,662,319 A1 discloses a process and an apparatus for changing the orientation of a predetermined number of articles according to the preamble of the appended claims 1 and 6 respectively, furthermore is directed to the orientation of moving bundles. In particular, it relates to a method and a system for forming a layer of packages to be palletized. This solution, however, does not change the orientation of containers before bundling or create a separate lane during orientation. Furthermore, EP-2,662,319 A1 shows moving bundles on a conveyor. The bundles can be picked up and rotated prior to placing the bundles in a different position.

### Summary of the invention

The objective of the invention is to arrange the articles on the conveyor so that the bundle can be easily stacked on top of each other. This problem can occur when the articles have caps on one side of the bundle causing a sloped surface that hinders stacking the bundles. The problem can be solved by arranging the articles so that the caps are always on the outside of the bundle.

In one aspect of the invention, the above problem is solved by a process for changing the orientation of a predetermined number of articles in a first lane on a moving conveyor in accordance with claim 1.

Possible further preferred variants of the process are set forth in claims 2 to 5.

In a further aspect of the invention, the above problem is solved by an apparatus for changing the orientation of a predetermined number of articles in a first lane on a moving conveyor in accordance with claim 6.

Possible further preferred embodiments of the apparatus are defined by claims 7 to 9.

### Brief Description of the Drawing

Figure 1 shows two lanes where the article in one lane has its orientation changed.
Figure 2 shows articles entering and releasing from the housings.
Figure 3 shows rotating the housing 180 degrees.
Figures 4 and 5 show the housings in different positions.

### Detailed Description of the Drawing

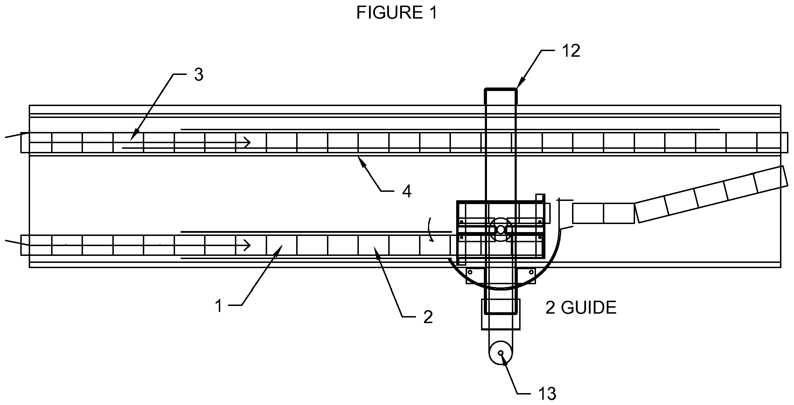

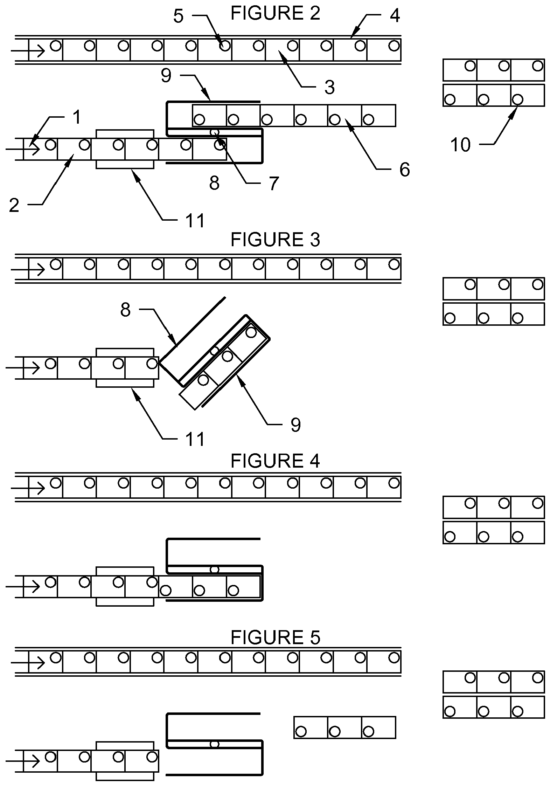

Figure 1 shows articles 1 in first lane 2 on a moving conveyor and articles 3 moving on third lane 4 on the conveyor. Figure 2 shows articles 3 in the third lane having caps 5 on the outside of the lane and articles 1 in the first lane 2 having caps 5 on the inside of the lane. In order to arrange articles 1 so that the caps 5 will be on the outside of the bundle as shown in second lane 6, a rotating post 7 having two attached housings 8 and 9 that will allow a predetermined number of articles to enter the housing and rotate the articles in the housing so that the caps will be on the outside of the bundle 10. As the conveyor releases the predetermined articles into new lane 6, the conveyor fills housing 8 with new predetermined number of bottles. When the housing rotates, a clamp 11 prevents the articles 1 from moving. A photo cell is looking for gaps between products. If there is no gap, the rotating post 7 will turn about 180 degrees. Figure 3 shows the housing 8 rotating while clamp 11 prevents the articles 1 from moving.

The rotating post 7 and the housings 8 and 9 forming enclosures are supported by a frame 12 that suspends the rotating post 7 above the conveyor. The top of the rotating post 7 can have an attached sprocket driven by a motor 13. The rotation is usually about 180 degrees at a time.

Moreover, as it can be seen in Figures 2 to 5, the path of the articles in the first lane 2 does not overlap in width with that of the articles in the second lane 6. The 180-degree-rotation of the housings 8 and 9 forces the paths of lanes 2 and 6 to be parallel to each other without an overlap of said paths.

## Claims

1. A process of changing the orientation of a predetermined number of articles (1) in a first lane (2) on a moving conveyor, comprising:
- changing the orientation of the articles in the first lane (2) by introducing a predetermined number of articles into a first housing (8) attached to a rotating post (7) and rotating the first housing (8) containing the predetermined number of articles to a position for releasing the articles (1) into a second lane (6),
- stopping the articles (1) in the first lane (2) to prevent movement of the articles (1) in the first lane (2) while the orientation of a predetermined number of articles is changed, and
- -releasing the articles (1) after the orientation has been changed into the second lane (6),
**characterized in that**, the process further comprising:
- providing a second housing (9) attached to the rotating post (7), and
- introducing a predetermined number of articles (1) into the second housing (9) while the articles are released from the first housing (8).

2. A process according to claim 1 wherein the second lane (6) joins a third lane (4) of articles (3) that are to be bundled in predetermined sets with the articles (1) in the second lane (6).

3. A process according to claim 2 wherein the articles (3) in said third lane (4) have caps (5) that are orientated so that the caps (5) are located on the outside of the bundle and the location of the caps (5) on the articles (1) in the first lane (2) has been changed so that in the second lane (6) the caps (5) are located on the outside of the bundle.

4. A process according to claim 1 wherein the rotating post (7) is suspended above the conveyor.

5. A process according to claim 1 wherein the path of the articles in the second lane (6) does not overlap in width with the path of the articles in the first lane (2).

6. An apparatus for changing the orientation of a predetermined number of articles (1) in a first lane (2) on a moving conveyor, comprising means for changing the orientation of the articles (1) in the first lane (2) by introducing a predetermined number of articles into a first housing (8) attached to a rotating post (7) including means for rotating the first housing (8) to a position for releasing the articles (1) into a second lane (6), means for stopping the articles in the first lane (2) to prevent movement of the articles (1) in the first lane (2) while the orientation of a predetermined number of articles (1) is changed, and means for releasing the articles (1) after the orientation has been changed into a separate second lane (6), **characterized in that**, the apparatus further comprises a second housing (9) attached to the rotating post (7) and means for introducing a predetermined number of articles (1) into the second housing (9) while the articles (1) are released from the first housing (8) and means for rotating the first and second housings (8, 9).

7. An apparatus according to claim 6 having means for joining the articles (1) in the second lane (6) with the articles (3) in a third lane (4) which are to be bundled in predetermined sets.

8. An apparatus according to claim 6 wherein the means for changing the orientation includes means for transporting the predetermined number of articles (1) into the first and second housing (8, 9) and rotating said first and second housing (8, 9) containing the predetermined number of articles (1) to a position for release the articles (1).

9. An apparatus according to claim 6 wherein the means for changing the orientation creates said separate second lane (6) that does not overlap in width with the first lane (2).

## Patentansprüche

1. Verfahren zur Änderung der Ausrichtung einer vorgegebenen Anzahl von Gegenständen (1) in einer ersten Spur (2) auf einer laufenden Fördervorrichtung, umfassend:
- Ändern der Ausrichtung der Gegenstände in der ersten Spur (2) durch Einbringen einer vorgegebenen Anzahl von Gegenständen in ein erstes Gehäuse (8), das an einem rotierenden Pfosten (7) angebracht ist, und Rotieren des ersten Gehäuses (8), das die vorgegebene Anzahl von Gegenständen enthält, in eine Position zur Freigabe der Gegenstände (1) in eine zweite Spur (6),
- Anhalten der Gegenstände (1) in der ersten Spur (2) zur Verhinderung von Bewegung der Gegenstände (1) in der ersten Spur (2), während die Ausrichtung einer vorgegebenen Anzahl von Artikeln geändert wird, und
- Freigeben der Gegenstände (1), nachdem die Ausrichtung in die zweite Spur (6) geändert worden ist,
**dadurch gekennzeichnet, dass** das Verfahren weiter umfasst:
- Bereitstellen eines zweiten Gehäuses (9), das an dem rotierenden Pfosten (7) angebracht ist, und
- Einbringen einer vorgegebenen Anzahl von Gegenständen (1) in das zweite Gehäuse (9), während die Artikel aus dem ersten Gehäuse (8) freigegeben werden.

2. Verfahren nach Anspruch 1, wobei die zweite Spur (6) an eine dritte Spur (4) von Gegenständen (3) anschließt, die in vorgegebenen Gruppen mit den Gegenständen (1) in der zweiten Spur (6) gebündelt werden sollen.

3. Verfahren nach Anspruch 2, wobei die Gegenstände (3) in der dritten Spur (4) Deckel (5) aufweisen, die so ausgerichtet sind, dass die Deckel (5) sich an der Außenseite des Bündels befinden und der Standort der Deckel (5) auf den Gegenständen (1) in der ersten Spur (2) geändert worden ist, sodass in der zweiten Spur (6) die Deckel (5) sich an der Außenseite des Bündels befinden.

4. Verfahren nach Anspruch 1, wobei der rotierende Pfosten (7) über der Fördervorrichtung aufgehängt ist.

5. Verfahren nach Anspruch 1, wobei der Weg der Gegenstände in der zweiten Spur (6) sich in der Breite nicht mit dem Weg der Gegenstände in der ersten Spur (2) überlappt.

6. Vorrichtung zur Änderung der Ausrichtung einer vorgegebenen Anzahl von Gegenständen (1) in einer ersten Spur (2) auf einer laufenden Fördervorrichtung, umfassend
Mittel zur Änderung der Ausrichtung der Gegenstände (1) in der ersten Spur (2) durch Einbringen einer vorgegebenen Anzahl von Gegenständen in ein erstes Gehäuse (8), das an einem rotierenden Pfosten (7) angebracht ist, einschließlich Mittel zum Rotieren des ersten Gehäuses (8) in eine Position zur Freigabe der Gegenstände (1) in eine zweite Spur (6),
Mittel zum Anhalten der Gegenstände in der ersten Spur (2) zur Verhinderung von Bewegung der Gegenstände (1) in der ersten Spur (2), während die Ausrichtung einer vorgegebenen Anzahl von Gegenständen (1) geändert wird, und
Mittel zur Freigabe der Artikel (1), nachdem die Ausrichtung in eine separate zweite Spur (6) geändert worden ist, **dadurch gekennzeichnet, dass** die Vorrichtung weiter ein zweites Gehäuse (9) umfasst, das an dem rotierenden Pfosten (7) angebracht ist,
und Mittel zum Einbringen einer vorgegebenen Anzahl von Gegenständen (1) in das zweite Gehäuse (9), während die Gegenstände (1) von dem ersten Gehäuse (8) freigegeben werden, und Mittel zum Rotieren des ersten und des zweiten Gehäuses (8, 9).

7. Vorrichtung nach Anspruch 6, die Mittel aufweist, um die Gegenstände (1) in der zweiten Spur (6) mit den Gegenständen (3) in einer dritten Spur (4) zusammenzubringen, die in vorgegebenen Gruppen gebündelt werden sollen.

8. Vorrichtung nach Anspruch 6, wobei das Mittel zur Änderung der Ausrichtung Mittel zum Transportieren der vorgegebenen Anzahl von Gegenständen (1) in das erste und das zweite Gehäuse (8, 9) und Rotieren des ersten und des zweiten Gehäuses (8, 9), welche die vorgegebene Anzahl von Gegenständen (1) enthalten, in eine Position zur Freigabe der Gegenstände (1) beinhaltet.

9. Vorrichtung nach Anspruch 6, wobei das Mittel zur Änderung der Ausrichtung die separate zweite Spur (6) erzeugt, die sich in der Breite nicht mit der ersten Spur (2) überlappt.

## Revendications

1. Procédé de changement de l'orientation d'un nombre prédéterminé d'articles (1) dans une première voie (2) sur un convoyeur en mouvement, comprenant :
- le changement de l'orientation des articles dans la première voie (2) en introduisant un nombre prédéterminé d'articles dans un premier logement (8) attaché à un montant rotatif (7) et en faisant tourner le premier logement (8) contenant le nombre prédéterminé d'articles jusqu'à une position pour libérer les articles (1) dans une deuxième voie (6),
- l'arrêt des articles (1) dans la première voie (2) pour empêcher le déplacement des articles (1) dans la première voie (2) alors que l'orientation d'un nombre prédéterminé d'articles est changée, et
- la libération des articles (1) après que l'orientation a été changée dans la deuxième voie (6),
**caractérisé en ce que** le procédé comprend en outre :
- la fourniture d'un deuxième logement (9) attaché au montant rotatif (7), et
- l'introduction d'un nombre prédéterminé d'articles (1) dans le deuxième logement (9) alors que les articles sont libérés du premier logement (8).

2. Procédé selon la revendication 1 dans lequel la deuxième voie (6) rejoint une troisième voie (4) d'articles (3) qui sont à assembler en jeux prédéterminés avec les articles (1) dans la deuxième voie (6).

3. Procédé selon la revendication 2 dans lequel les articles (3) dans ladite troisième voie (4) comportent des capuchons (5) qui sont orientés de telle sorte que les capuchons (5) se situent sur l'extérieur de l'ensemble et l'emplacement des capuchons (5) sur les articles (1) dans la première voie (2) a été changé de telle sorte que, dans la deuxième voie (6), les capuchons (5) se situent sur l'extérieur de l'ensemble.

4. Procédé selon la revendication 1 dans lequel le montant rotatif (7) est suspendu au-dessus du convoyeur.

5. Procédé selon la revendication 1 dans lequel le chemin des articles dans la deuxième voie (6) ne chevauche pas en largeur le chemin des articles dans la première voie (2).

6. Appareil pour changer l'orientation d'un nombre prédéterminé d'articles (1) dans une première voie (2) sur un convoyeur en mouvement, comprenant
un moyen pour changer l'orientation des articles (1) dans la première voie (2) en introduisant un nombre prédéterminé d'articles dans un premier logement (8) attaché à un montant rotatif (7) incluant un moyen pour faire tourner le premier logement (8) jusqu'à une position pour libérer les articles (1) dans une deuxième voie (6),
un moyen pour arrêter les articles dans la première voie (2) afin d'empêcher le déplacement des articles (1) dans la première voie (2) alors que l'orientation d'un nombre prédéterminé d'articles (1) est changée, et
un moyen pour libérer les articles (1) après que l'orientation a été changée dans une deuxième voie séparée (6), **caractérisé en ce que** l'appareil comprend en outre un deuxième logement (9) attaché au montant rotatif (7),
et un moyen pour introduire un nombre prédéterminé d'articles (1) dans le deuxième logement (9) alors que les articles (1) sont libérés du premier logement (8) et un moyen pour faire tourner les premier et deuxième logements (8, 9).

7. Appareil selon la revendication 6 comportant un moyen pour joindre les articles (1) dans la deuxième voie (6) aux articles (3) dans une troisième voie (4) qui sont à assembler en jeux prédéterminés.

8. Appareil selon la revendication 6 dans lequel le moyen pour changer l'orientation inclut un moyen pour transporter le nombre prédéterminé d'articles (1) dans les premier et deuxième logements (8, 9) et faire tourner lesdits premier et deuxième logements (8, 9) contenant le nombre prédéterminé d'articles (1) jusqu'à une position pour libérer les articles (1).

9. Appareil selon la revendication 6 dans lequel le moyen pour changer l'orientation crée ladite deuxième voie séparée (6) qui ne chevauche en largeur la première voie (2).
